# EUROPÄISCHE PATENTSCHRIFT

(11) **EP 4 018 109 B1**
(45) Veröffentlichungstag und Bekanntmachung des Hinweises auf die Patenterteilung: **07.06.2023**
(21) Anmeldenummer: 20768264.2
(22) Anmeldetag: 13.08.2020
(51) Int. Cl.: F16D 49/14, F16D 63/00, F16D 49/12

(54) **BREMS- UND/ODER KLEMMELEMENT MIT INNENLIEGENDEM DRUCKRAUM**
BRAKING AND/OR CLAMPING ELEMENT WITH INTERNAL PRESSURE SPACE
ÉLÉMENT DE FREINAGE ET/OU DE SERRAGE À ESPACE DE PRESSION INTERNE

(30) Priorität: 22.08.2019 DE 102019005877
(43) Veröffentlichungstag der Anmeldung: 29.06.2022
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2020/000186
(87) Internationale Veröffentlichungsnummer: WO 2021/032232

(56) Entgegenhaltungen:
- EP-A1- 1 524 067
- US-A- 3 663 027
- US-A1- 2007 090 610
- US-B2- 7 392 886

## Beschreibung

Die Erfindung betrifft ein Brems- und/oder Klemmelement mit einem, mindestens einen hydraulischen Anschluss, eine Innenwandung und eine Außenwandung aufweisenden ringförmigen Gehäuse.

Aus der DE 10 2005 016 723 A1 ist eine Ringklemmung mit einer Vielzahl von hydraulisch oder pneumatisch betätigten Keilgetrieben bekannt.

Aus US 3 663 027 A ist eine flüssigkeitsbetätigte Ringklammer bekannt.

Der vorliegenden Erfindung liegt die Problemstellung zugrunde, ein kostengünstiges Brems- und/oder Klemmelement zu entwickeln, das einen geringen Bauraum beansprucht.

Diese Problemstellung wird mit den Merkmalen des Hauptanspruches gelöst. Dazu sind die Innenwandung und die Außenwandung mittels radial orientierter Zugbolzen miteinander verbunden. Im Gehäuse ist ein an die Außenwandung angrenzender und von der Innenwandung beabstandeter, mit dem genannten hydraulischen Anschluss verbundener Druckraum angeordnet, wobei die Außenwandung eine Außenmembran des Druckraums bildet. Im Gehäuse ist ein an die Innenwandung angrenzender, von der Außenwandung beabstandeter Ausgleichsraum angeordnet, wobei die Innenwandung eine Innenmembran bildet. Außerdem ist die Summe der minimalen Wandstärken der Innenmembran und der Außenmembran kleiner als die minimale Wandstärke jedes anderen, den Druckraum begrenzenden Begrenzungswandabschnitts des Gehäuses, sodass bei hydraulischer Belastung des Druckraums die minimale Steifigkeit des Brems- und/oder Klemmelements in radialer Richtung orientiert ist.

In dem beschriebenen Brems- und/oder Klemmelement wird zum Klemmen und zum Lüften die Gestalt des Gehäuses verändert. Das Gehäuse bildet hierbei eine Feder, die im entlasteten Zustand eine rotierbare oder in Längsrichtung verschiebbare Welle klemmt. Beim Lüften der Klemmung wird das Gehäuse elastisch verformt, sodass der Innendurchmesser des Brems- und/oder Klemmelements zunimmt und die Welle freigegeben wird. Die Verformung des Gehäuses erfolgt mittels eines hydraulischen Mediums, z.B. Hydrauliköl, dessen Druck in einem innerhalb des Gehäuses angeordneten Druckraum erhöht wird. Bei dieser Druckerhöhung bildet die der Welle abgewandte Außenwandung des Gehäuses eine Außenmembran, die radial nach außen verformt wird. Bei dieser Verformung zieht der in der Außenwandung gelagerte Zugbolzen die Innenwandung bereichsweise mit, sodass der Innendurchmesser des Brems- und/oder Klemmelements vergrößert wird. Nach der Druckentlastung schnellt das Brems- und/oder Klemmelement federartig in seine klemmemde Ausgangslage zurück. Das Brems- und/oder Klemmelement ist damit stromlos geschlossen.

Weitere Einzelheiten der Erfindung ergeben sich aus den Unteransprüchen und der nachfolgenden Beschreibung schematisch dargestellter Ausführungsformen.
- Figur 1:: Isometrische Ansicht des Brems- und/oder Klemmelements;
- Figur 2:: Teilquerschnitt von Figur 1;
- Figur 3:: Isometrische Ansicht des Gehäusebodens;
- Figur 4:: Querschnitt des Gehäusebodens;
- Figur 5:: Isometrische Ansicht des Gehäusedeckels;
- Figur 6:: Querschnitt des Gehäusedeckels;
- Figur 7:: Teilschnitt durch den Ausgleichsraumanschluss;
- Figur 8:: Isometrische Ansicht des Zugbolzens;
- Figur 9:: Isometrische Ansicht des Zugbolzens von hinten;
- Figur 10:: Brems- und/oder Klemmelement in Lüftstellung;
- Figur 11:: Brems- und/oder Klemmelement mit erhöhtem Anpressdruck;
- Figur 12:: Variante des Brems- und/oder Klemmelements;
- Figur 13:: Teilschnitt der Figur 12;
- Figur 14:: Zugbolzen aus Figur 12;
- Figur 15:: Schnitt des Sicherungsadapters aus Figur 12;
- Figur 16:: Weitere Variante des Brems- und/oder Klemmelements;
- Figur 17:: Schnitt der Figur 16.

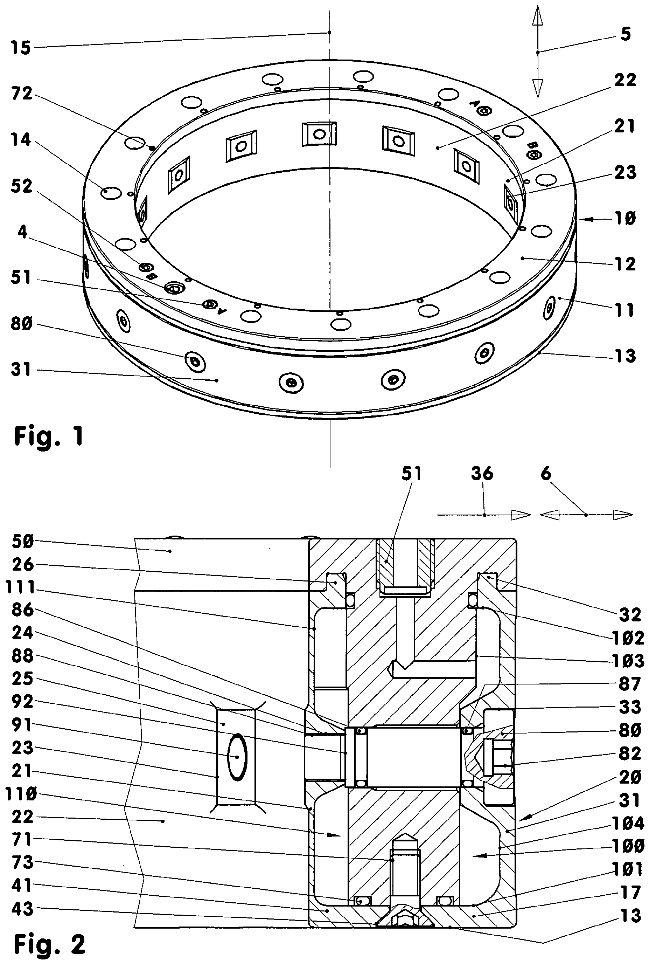

Die Figuren 1 bis 11 zeigen eine erste Variante eines Brems- und/oder Klemmelements (10). Brems- und/oder Klemmelemente (10) werden eingesetzt, um rotierende oder translatorisch bewegte Wellen zu verzögern oder im Stillstand zu sichern. Die Wellen können hierbei einen runden oder einen unrunden Querschnitt haben.

Das dargestellte Brems- und/oder Klemmelement (10) ist ringförmig aufgebaut. Eine gedachte Längsachse (15) durchdringt das Brems- und/oder Klemmelement (10) in der Längsrichtung (5). Diese Längsachse (15) bildet die Mittellinie des Brems- und oder Klemmelements (10). Das Brems- und/oder Klemmelement (10) hat ein Gehäuse (11), das in der Längsrichtung (5) mittels einer Deckelseite (12) und einer Bodenseite (13) begrenzt ist. Im Ausführungsbeispiel werden sowohl die Deckelseite (12) als auch die Bodenseite (13) durch Hüllebenen begrenzt, die normal zur Längsrichtung (5) orientiert sind. In radialer Richtung (6) ist das Brems- und/oder Klemmelement (10) mittels einer Innenwandung (21) und einer Außenwandung (31) begrenzt. Beispielsweise sind sowohl die Innenwandung (21) als auch die Außenwandung (31) weitgehend zylindrisch ausgebildet. In diesem Ausführungsbeispiel sind die beiden Wandungen (21, 31) koaxial zur Längsachse (15).

Das Brems- und Klemmelement (10) ist beispielsweise mittels Befestigungsschrauben (4) an einem hier nicht dargestellten Trägerteil befestigbar. Diese Befestigungsschrauben (4) sitzen in z.B. in Befestigungsbohrungen (14), die das Gehäuse (11) in der Längsrichtung (5) durchdringen. Der Innendurchmesser des Brems- und/oder Klemmelements (10) beträgt beispielsweise 260 Millimeter. Der Außendurchmesser beträgt z.B. das 1,25-fache des Innendurchmessers. Die in der Längsrichtung (5) orientierte Länge des Brems- und/oder Klemmelements (10) beträgt z.B. 25 % des Innendurchmessers.

Das Gehäuse (11) umfasst einen Gehäuseboden (20) und einen Gehäusedeckel (50). Diese sind mittels an der Bodenseite (13) angeordneter Verschlussschrauben (71) miteinander verbunden. Die Lage dieser beiden Bauteile (20, 50) zueinander ist zusätzlich mittels einer Vielzahl von Zentrierstiften (72) gesichert. Am Gehäusedeckel (50) sind zwei hydraulische Anschlüsse (51) und zwei Ausgleichsraumanschlüsse (52) angeordnet. Das Brems- und/oder Klemmelement (10) kann ohne die Ausgleichsraumanschlüsse (52), mit nur einem Ausgleichsraumanschluss (52) und/oder mit nur einem hydraulischen Anschluss (51) ausgebildet sein. Der einzelne Ausgleichsraumanschluss (52) kann als Durchgangsöffnung, als pneumatischer Anschluss oder als zweiter Hydraulikanschluss (52) ausgebildet sein.

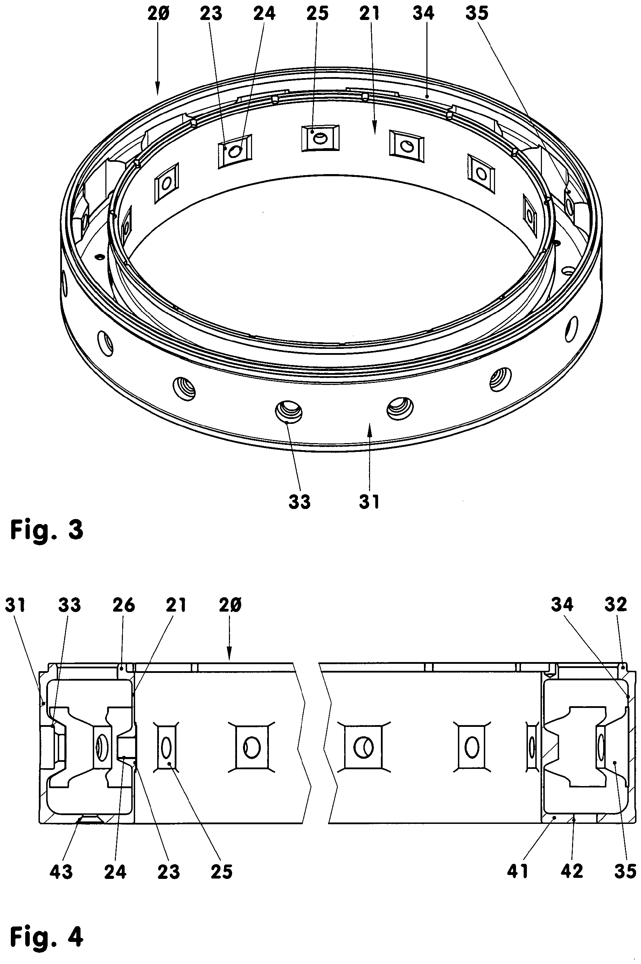

Der in den Figuren 3 und 4 dargestellte Gehäuseboden (20), das Gehäuseunterteil (20), ist ringförmig ausgebildet. In einer Radialebene hat er einen U-förmigen Querschnitt. Dieser umfasst einen Grundring (41), die Innenwandung (21) und die Außenwandung (31). Der Grundring (41) ist eben ausgebildet. Seine Dicke beträgt z.B. 1,45 % des Innendurchmessers des Brems- und/oder Klemmelements (10). Im Grundring (41) sind z.B. entlang eines gemeinsamen Teilkreises abwechselnd zylindrische Durchbrüche (42) und kegelförmig angesenkte Durchbrüche (43) angeordnet. Beispielsweise weist der Grundring (41) jeweils 15 Durchbrüche (42; 43) jeder Art auf. Bei montiertem Brems- und/oder Klemmelement (10) bildet der Grundring (41) eine Begrenzungswand (17) des Gehäuses (11).

Die Außenwandung (31) ist beispielsweise zylindrisch ausgebildet. Ihr Außendurchmesser entspricht im Ausführungsbeispiel dem Außendurchmesser des Brems- und/oder Klemmelements (10). Sie hat beispielsweise entlang des Umfangs Segmente mit gleichartigem Profilaufbau. Die minimale Wandstärke der Außenwandung (31) beträgt beispielsweise 1,07 % des Innendurchmessers des Brems- und/oder Klemmelements (10). An ihrem freien Ende trägt die Außenwandung (31) einen Zentrierabsatz (32). Weiterhin hat die Außenwandung (31) z.B. 15 eingesenkte Durchbrüche (33). Diese liegen jeweils in einer gemeinsamen radialen Ebene mit den kegelförmigen angesenkten Durchbrüchen (43) des Grundrings (41). Auf der Innenseite (34) der Außenwandung (31) sind im Bereich der eingesenkten Durchbrüche (33) jeweils Verstärkungen (35) angeordnet.

Die Innenwandung (21) hat eine zylinderförmige Schalenfläche (22), in der Verstärkungsfüße (23) angeordnet sind. Die Schalenfläche (22) ist beispielsweise koaxial zur Außenwandung (31) angeordnet. Die minimale Wandstärke der Innenwandung (21) beträgt im Ausführungsbeispiel 0,35 % des Innendurchmessers des Brems- und/oder Klemmelements (10). Die Verstärkungsfüße (23) haben jeweils ein Durchgangsgewinde (24). Die Innenfläche (25) eines jeden Verstärkungsfußes (23) ist koaxial zur Schalenfläche (22) ausgebildet. Die Durchgangsgewinde (24) fluchten mit den eingesenkten Durchbrüchen (33) der Außenwandung (31). An ihrem freien Ende trägt die Innenwandung (21) einen umlaufenden Zentrierbund (26).

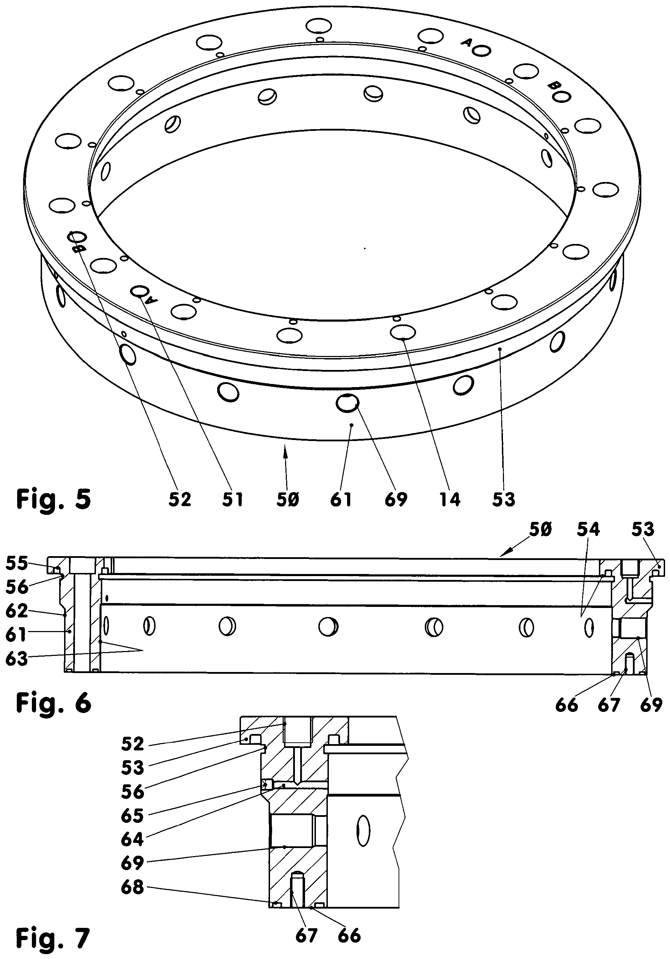

Die Figuren 5 - 7 zeigen den Gehäusedeckel (50). Der Gehäusedeckel (50), das Gehäuseoberteil (50, umfasst einen Auflageflansch (53) und einen Stützring (61). Der Auflageflansch (53) hat den Außendurchmesser des Brems- und/oder Klemmelements (10). Seine Dicke beträgt beispielsweise 3,5 % des Innendurchmessers des Brems- und/oder Klemmelements (10). Den Auflageflansch (53) und den Stützring (61) durchdringen die Befestigungsbohrungen (14). An der Unterseite (54) des Auflageflanschs (53) sind zwei Ringnuten (55) für den Zentrierbund (26) und den Zentrierabsatz (32) eingeprägt. Der erste Hydraulikanschluss (51) ist mit der Außenseite (62) des Stützrings (61) verbunden. Der in der Figur 7 im Schnitt dargestellte zweite Hydraulikanschluss (52) ist mit der Innenseite (63) des Stützrings (61) verbunden. Ein Stopfen (65) verschließt die Montagebohrung (64).

Der Stützring (61) ist zylinderringförmig ausgebildet. Bei montiertem Klemm- und/oder Bremselement (10) ist er konzentrisch zum Gehäuseunterteil (20) und zur Längsachse (15) ausgebildet. Der Außendurchmesser des Stützrings (61) ist im Ausführungsbeispiel um 20 % größer als der Innendurchmesser des Brems- und/oder Klemmelements (10). Der Innendurchmesser des Stützrings (61) ist beispielsweise um 5 % größer als der Innendurchmesser des Brems- und/oder Klemmelements (10). Die in der Längsrichtung (5) orientierte Höhe des Stützrings (61) entspricht beispielsweise der Höhe des Gehäuseunterteils (20) oberhalb des Grundrings (41). An seiner Unterseite (66) hat der Stützring (61) zwischen den Befestigungsbohrungen (14) angeordnete Gewindebohrungen (67). Diese fluchten bei montiertem Brems- und/oder Klemmelement (10) mit den kegelförmig angesenkten Durchbrüchen (43) des Grundrings (41). An der Unterseite (66) des Stützrings (61) sind weiterhin zwei Dichtringnuten (68) zur Aufnahme von Dichtringen (73) eingeprägt. In dem an den Auflageflansch (53) angrenzenden Bereich hat der Stützring (61) an seiner Innenseite (63) und an seiner Außenseite (62) eingeprägte Dichtringnuten (56) zur Aufnahme von Dichtringen (57).

In radialer Richtung (6) durchdringen den Stützring (61) eine Vielzahl von Zugbolzendurchbrüchen (69). Diese verjüngen sich beispielsweise einstufig von außen nach innen. Bei montiertem Brems- und/oder Klemmelement (10) fluchten die Zugbolzendurchbrüche (69) sowohl mit den eingesenkten Durchbrüchen (33) der Außenwandung (31) als auch mit den Durchgangsgewinden (24) der Innenwandung (21).

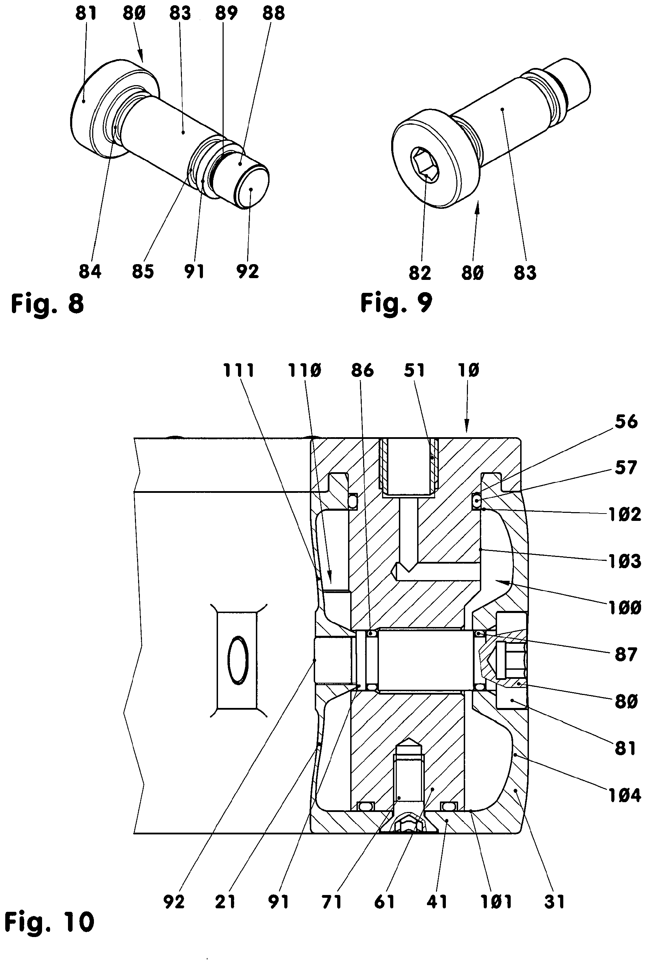

In den Figuren 8 und 9 ist ein Zugbolzen (80) dargestellt. Dies ist ein gestufter Gewindebolzen mit einem Zugbolzenkopf (81). Im Ausführungsbeispiel hat der z.B. zylindrische Zugbolzenkopf (81) einen Innensechskant (82). Der Schaft (83) hat zwei umlaufende Ringnuten (84, 85) zur Aufnahme von Dichtringen (86, 87). Das Gewinde (88) ist am freien Ende des Schafts (83) angeordnet und mittels eines Freistichs (89) von einem Bund (91) beabstandet.

Beim Zusammenbau des Brems- und/oder Klemmelements (10) werden beispielsweise zunächst die Dichtringe (57, 73, 86, 87) auf die Zugbolzen (80) und am Gehäusedeckel (50) eingesetzt. Anschließend wird der Gehäusedeckel (50) in das Gehäuseunterteil (20) eingeführt. Diese beiden Teile (20, 50) werden mit z.B. als Senkschrauben (71) ausgebildeten Verschlussschrauben (71), die in die kegelförmig angesenkten Durchbrüche (43) eingesetzt werden, gesichert. Beispielsweise ist nach dem Einsetzen des Gehäuseoberteils (50) in das Gehäuseunterteil (20) der Stützring (61) sowohl von der Innenwandung (21) als auch von der Außenwandung (31) beabstandet. Nun werden die Zugbolzen (80) in radialer Richtung (6) in die eingesenkten Durchbrüche (33) der Außenwandung (31) eingesetzt. Die Zugbolzen (80) werden durch den Stützring (61) hindurchgeschoben und in die Durchgangsgewinde (24) der Innenwandung (21) eingeschraubt. Hierbei wird beispielsweise das Gewinde (88) des Zugbolzens (80) gegen den z.B. an der Innenwandung (21) anliegenden Bund (91) verspannt. Die Außenwandung (31) kann hierbei verformt werden. Abschließend wird beispielsweise zumindest ein erster Hydraulikanschluss (51) angeschlossen. Ein weiterer erster Hydraulikanschluss (51) kann z.B. mittels eines Verschlussstopfens verschlossen werden. In dem so vorbereiteten Brems- und/oder Klemmelement (10) liegt der Innendurchmesser beispielsweise in einem Toleranzfeld des Nenndurchmessers, in dem er mit der zu klemmenden Welle eine Presspassung bildet.

Im Brems- und/oder Klemmelement (10) begrenzen die Außenwandung (31), der Grundring (41) und der Stützring (61) einen Druckraum (100). Dieser Druckraum (100) ist mittels mindestens eines ersten Hydraulikanschlusses (51) mit der Umgebung verbunden. Die Außenwandung (31) hat in ihrem Mantelbereich den Begrenzungswandabschnitt (31) des Druckraums (100) mit der geringsten minimalen Wandstärke. Die Außenwandung bildet damit eine Außenmembran (104) des Druckraums (100). Die Außenmembran (104) begrenzt den Druckraum (100) in radialer Richtung (6).

Die Innenwandung (21), der Grundring (41) und der Stützring (61) begrenzen einen Ausgleichsraum (110) des Brems- und/oder Klemmelements (10). Dieser Ausgleichsraum (110) kann mittels eines Ausgleichsraumanschlusses (52), z.B. des zweiten Hydraulikanschlusses (52) oder der zweiten Hydraulikanschlüsse (52) mit der Umgebung verbunden sein. Die Innenwandung (21) hat an ihren Innenmantelbereich ihre geringste Wandstärke. Dieser Bereich bildet eine Innenmembran (111) des Ausgleichsraums (110). Die Innenmembran (111) begrenzt den Ausgleichsraum (110) in radialer Richtung (6).

Zum Aufsetzen des Brems- und/oder Klemmelements (10) auf eine Welle wird ein erster Hydraulikanschluss (51) an ein Hydraulikaggregat angeschlossen. Dies kann z.B. über ein 2/2- Wegeventil, ein 3/2 oder ein 3/3-Wegeventil erfolgen. Der zweite der ersten Hydraulikanschlüsse (51) wird beispielsweise nach dem Entlüften des Druckraums (100) verschlossen. Die Druckbeaufschlagung des Druckraums (100) beispielsweise mit Hydrauliköl erfolgt z.B. mit einem Druck zwischen 8 Megapascal und 12 Megapascal. Dieser Druck belastet sämtliche den Druckraum (100) begrenzenden Begrenzungswandabschnitte (104, 101, 102, 103). Mit zunehmendem Innendruck beult der schwächste Begrenzungswandabschnitt, die Außenmembran (104) der Außenwandung (31) aus. Die Verformung der Außenmembran (104) verbleibt an allen Stellen im elastischen Bereich, sodass bei einer nachfolgenden Entlastung des Druckraums (100) keine bleibende Verformung verbleibt. Die geometrische Gestaltung der Außenwandung (31) verhindert auch eine Rissbildung bei der Verformung.

Die Figur 10 zeigt einen Teilquerschnitt des Brems- und/oder Klemmelements (10) mit hydraulisch belastetem Druckraum (100). Der Grundring (41) und der Gehäusedeckel (50) haben ihre Lage und ihre Gestalt nicht verändert. Die Außenwandung (31) hat beim Ausbeulen den Zugbolzen (80) mitgezogen. Der Hub jedes einzelnen Zugbolzens (80) in radialer Richtung (6) beim oben angegebenen hydraulischen Druck beträgt beispielsweise 0,1 % des Innendurchmessers des Brems- und/oder Klemmelements (10). Der Zugbolzen (80) zieht die Innenmembran (111) der Innenwandung (21) in die Verformungsrichtung (36) der Außenwandung (31). Der Ausgleichsraum (110) wird verkleinert. Gegebenenfalls kann hierbei Luft aus dem Ausgleichsraum (110) durch den Ausgleichsraumanschluss (52) entweichen. Auch die Verformung der Innenwandung (21) erfolgt an allen Stellen im elastischen Bereich, sodass bei einer Rückverformung der Innenwandung (21) keine plastische Verformung verbleibt oder Risse entstehen.

Die Vergrößerung des Innendurchmessers des Brems- und/oder Klemmelements (10) bei der oben genannten hydraulischen Belastung beträgt beispielsweise 0,2 % des Innendurchmessers. In dieser Lüftstellung kann das Brems- und/oder Klemmelement (10) nahezu widerstandsfrei auf die Welle geschoben werden. Hier kann es beispielsweise relativ zur Welle in der Längsrichtung (5) positioniert werden. Sobald der hydraulische Druck im Druckraum (10) z.B. auf den Umgebungsdruck reduziert wird - dies erfolgt beispielsweise durch Umsteuern des Wegeventils - verformen sich sowohl die Innenwandung (21) als auch die Außenwandung (31) in ihre in den Figuren 1 und 2 dargestellte Ausgangslage zurück. Das Brems- und/oder Klemmelement (10) liegt jetzt fest an der Welle an und blockiert diese. Das Brems- und/oder Klemmelement (10) bildet damit ein Ringklemmelement der z.B. rotierbaren Welle. Das erstmals auf die Welle aufgeschobene Brems- und/oder Klemmelement (10) kann nun mittels der Befestigungsschrauben (4) am Träger befestigt werden.

Während des Betriebs erfolgt das Lüften der Klemmung und die Freigabe der Welle, wie oben beschrieben. Jeder einzelne Zugbolzen (80) wird in radialer Richtung (6) des Brems- und/oder Klemmelements (10) verschoben. Im Brems- und/oder Klemmelement (10) ist die Summe der minimalen Wandstärken der Innenmembran (111) und der Außenmembran (104) kleiner als die minimale Wandstärke jedes anderen, den Druckraum (100) begrenzenden Begrenzungswandabschnitts (101; 102; 103) des Gehäuses (11). Auch ist die Summe der Widerstandsmomente der Innenmembran (111) und der Außenmembran (104) gegen eine Belastung in radialer Richtung (6) kleiner als das Widerstandsmoment jedes anderen Begrenzungswandabschnitts (101; 102; 103) des Gehäuses (11) bei Druckbeaufschlagung des Druckraums (100). Weiterhin ist im Ausführungsführungsbeispiel die Außenmembran (104) die größte Wandfläche des Druckraums (100).

Bei erneuter Druckentlastung des Druckraums (100) des Brems- und/oder Klemmelements (10) legt sich dieses wieder klemmend an die Welle an. Beim Abbremsen einer rotierenden Welle verhindert die Innenmembran (111) und ggf. die Führung der Zugbolzen (80) im Stützring (61) des Gehäusedeckels (50) eine Torsion des Brems- und/oder Klemmelements (10). Das Brems- und/oder Klemmelement (10) ist damit torsionssteif ausgebildet.

Gegebenenfalls kann in diesem Zustand der Ausgleichsraum (110) z.B. hydraulisch beaufschlagt werden. Hierbei wird über den zweiten Hydraulikanschluss (52) Öl in den Ausgleichsraum (110) gefördert. Bei zunehmendem Öldruck wird die Innenwandung (21) verformt. Sie bildet eine Innenmembran (111) des Ausgleichsraums (110). Der Anpressdruck des Brems- und/oder Klemmelements (10) an der Welle wird erhöht.

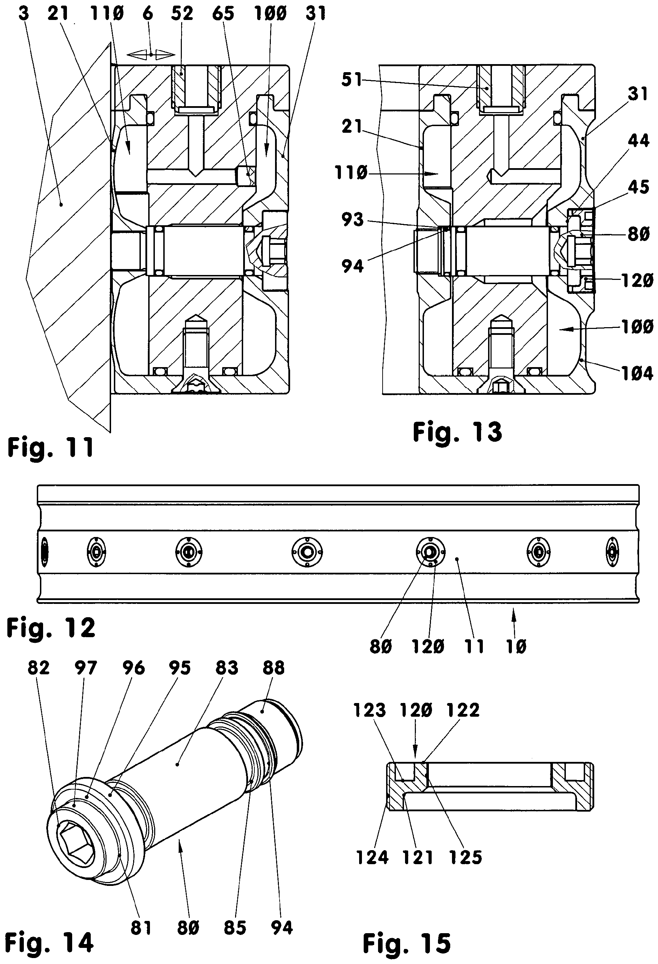

In der Figur 11 ist das Brems- und/oder Klemmelement (10) mit druckbeaufschlagten Ausgleichsraum (110) dargestellt. Das Brems- und/oder Klemmelement (10) liegt in diesem Ausführungsbeispiel mit den Zugbolzenenden (92) an der Welle (3) an. Gegebenenfalls können auch die Verstärkungsfüße (23) auf die Welle (3) gepresst sein. Auch ist es denkbar, die Innenwandung (21) so weit elastisch zu verformen, dass sie zusätzlich an der Welle (3) anliegt. Beim Verformen der Innenwandung (21) werden die Zugbolzen (80) radial in Richtung der Mittelachse (15) gezogen. Der Druckraum (100) wird mittels der nach innen verformten Außenwandung (31) komprimiert. Zum erneuten Lüften der Klemmung wird der Druck im Ausgleichsraum (110) z.B. auf den Umgebungsdruck vermindert und beispielsweise anschließend der Druck im Druckraum (100) erhöht. Diese beiden Teilvorgänge können sich gegebenenfalls überlappen.

In den Figuren 12 - 15 ist eine Variante des Brems- und/oder Klemmelements (10) dargestellt. Das Gehäuse (11) ist weitgehend so aufgebaut, wie im Zusammenhang mit dem ersten Ausführungsbeispiel beschrieben. Der Zugbolzen (80) trägt in der Darstellung der Figur 13 drei Dichtringe (86. 87. 93). Die ersten beiden dieser Dichtringe (86, 87) dichten wie im Ausführungsbeispiel der Figuren 1 - 11 den Druckraum (100) gegen das Gehäuseoberteil (50) im Bereich des Auflageflansches (53) und im Bereich des Stützringes (61) ab. Ein dritter Dichtring (93) sitzt am freien Ende des Schaftes (83) in einer Ringnut (94) oberhalb des Gewindes (88). Dieser dritte Dichtring (93) dichtet den Ausgleichsraum (110) gegen die Innenwandung (21) ab.

Der Zugbolzenkopf (81) hat einen Auflagebund (95), der auf einem Auflagering (44) der Außenwandung (31) aufliegt. Weiterhin hat der Zugbolzenkopf (81) eine Stufenfläche (96). Oberhalb der Adapterauflage (96) hat der Zugbolzenkopf (81) ein Außengewinde (97). Dies hat beispielsweise die gleiche Steigungsrichtung wie das Gewinde (88) des Zugbolzens (80).

Die Figur 15 zeigt eine Schnittdarstellung des Sicherungsadapters (120). Der Sicherungsadapter (120) ist ringförmig aufgebaut. Er hat eine als Einsenkung (121) ausgebildete Sicherungsaufnahme (121), mit der er im montierten Zustand den Zugbolzenkopf (81) umgreift. An seiner Stirnfläche (122) hat der Sicherungsadapter (120) vier Zapfenaufnahmen (123) zum Ansetzen eines Montagewerkzeugs. Die Umfangsfläche des Sicherungsadapters (120) trägt ein Außengewinde (124). Mit diesem Außengewinde (124) ist der Sicherungsadapter (120) in einem Innengewinde (45) der Außenwandung (31) fixiert. Weiterhin hat der Sicherungsring (120) in seinem Bereich kleineren Durchmessers ein Innengewinde (125). Die Steigungen des Innengewindes (125) und des Außengewindes (124) sind im Ausführungsbeispiel gleichgerichtet.

Bei der Montage wird der einzelne Zugbolzen (80) beispielsweise soweit in die Innenwandung (21) eingeschraubt, bis der Zugbolzenkopf (81) auf dem Auflagering (44) aufliegt und das Gehäuse (11) gegen diesen vorspannt. Beispielsweise ragen die Zugbolzenenden (92) nun um einen definierten Betrag, z.B. 0,5 Millimeter, aus der Innenwandung (21) heraus. Anschließend wird der Sicherungsadapter (120) in die Außenwandung (31) eingeschraubt und auf den Zugbolzenkopf (81) aufgeschraubt, bis er den Zugbolzenkopf (81) gegen ein Lösen sichert. Dies erfolgt beispielsweise mit einem vorgegebenen Anzugsmoment. Hierbei wird der Zugbolzen (80) vorgespannt. Damit werden die Verformungskräfte der Außenmembran (104) sowohl beim Belasten als auch beim Entlasten auf die Innenmembran (111) übertragen.

Die Funktion dieses Brems- und/oder Klemmelements (10) entspricht der Funktion des im ersten Ausführungsbeispiel beschriebenen Brems- und/oder Klemmelements (10). Auch in diesem Fall spricht das Brems- und/oder Klemmelement (10) spontan auf Änderungen des hydraulischen Druckes an. Im Gesamtsystem des Brems- und/oder Klemmelements (10) sind bei Belastung des Druckraums (100) die Innenwandung (21) und die Außenwandung (31) kinematisch in Reihe geschaltet. Damit entspricht die Federsteifigkeit des Gesamtsystems der Summe aus der Federsteifigkeit der Innenwandung (21) und der Federsteifigkeit der Außenwandung (31). Bei einer hydraulischen Belastung des Druckraums (100) ist auch in diesem Ausführungsbeispiel die Federsteifigkeit des Brems- und/oder Klemmelements (10) in radialer Richtung (6) kleiner als in allen anderen Richtungen.

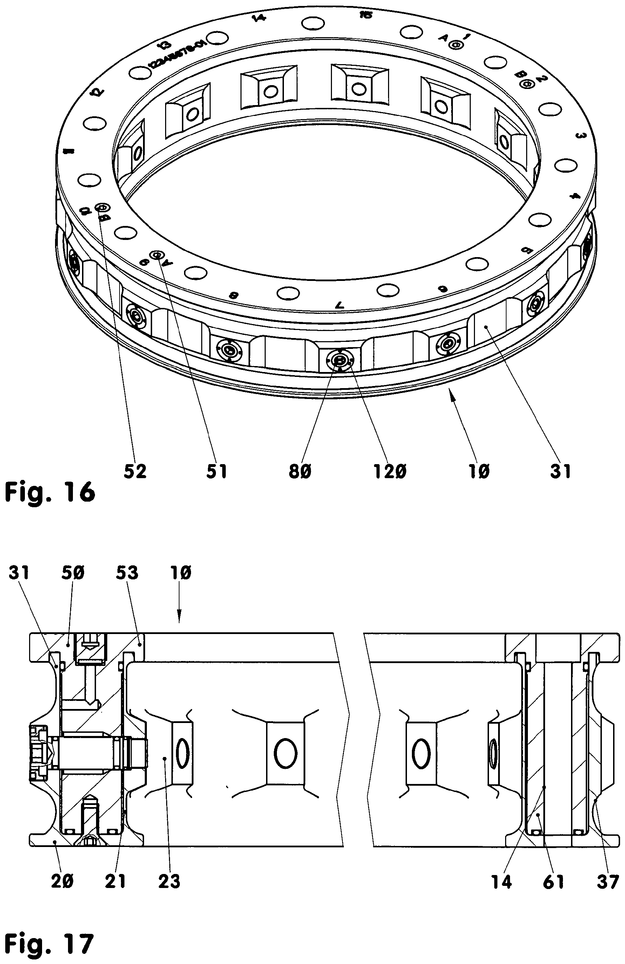

Die Figuren 16 und 17 zeigen eine weitere Variante eines Brems- und/oder Klemmelements (10). Die Hauptabmessungen und der Aufbau dieses Brems- und/oder Klemmelements (10) entspricht weitgehend den entsprechenden Daten der vorgenannten Ausführungsbeispiele.

Die Außenwandung (31) hat zwei umlaufende Ringnuten (37). Diese sind in den Darstellungen oberhalb und unterhalb der Verstärkungen (35) der Außenwandung (31) angeordnet. Der Druckraum (100) ist spaltförmig ausgebildet. In den Zugbolzendurchbrüchen (69) umgibt der Druckraum (100) mantelförmig den einzelnen Zugbolzen (80) bereichsweise. Die minimale Wandstärke der Außenwandung (31) beträgt in diesem Ausführungsbeispiel 0,5 % des Innendurchmessers des Brems- und/oder Klemmelements (10).

Auch der Ausgleichsraum (110) ist in diesem Ausführungsbeispiel spaltförmig ausgebildet. Die minimale Wandstärke der Innenwandung (21) beträgt in diesem Ausführungsbeispiel 0,15 % des Innendurchmessers des Brems- und/oder Klemmelements (10).

In diesem Ausführungsbeispiel erfolgt die spanende Bearbeitung der Innenmembran (111) und der Außenmembran (104) im Wesentlichen nur von der Außenseite des Gehäusedeckels (50). Der Gehäusedeckel (50) ist damit kostengünstig herstellbar.

Der Zusammenbau dieses Brems- und/oder Klemmelements (10) erfolgt analog dem Zusammenbau der vorbeschriebenen Brems- und/oder Klemmelemente (10).

Beim Lüften des in den Figuren 16 und 17 dargestellten Brems- und/oder Klemmelements (10) spricht dieses bereits bei einer geringen Änderung des hydraulischen Drucks im Druckraum (100) an. Hierfür ist nur ein geringes Volumen hydraulischen Öls erforderlich. Gegebenenfalls kann das Lüften durch Erzeugung eines Unterdrucks im Ausgleichsraum (110) unterstützt werden. Aufgrund der Federeigenschaften der Innenwandung (21) und der mit dieser gekoppelten Außenwandung (31) in radialer Richtung (6) erfolgt auch eine spontane Rückstellung des Brems- und/oder Klemmelements (10) beim Entlasten des hydraulischen Drucks. Das eine Radialklemmvorrichtung (10) bildende Brems- und/oder Klemmelement (10) spricht sofort an. Auch in diesem Fall kann die Klemmkraft durch hydraulische und/oder pneumatische Druckbeaufschlagung des Ausgleichsraums (110) erhöht werden.

### Bezugszeichenliste:

- 3: Welle
- 4: Befestigungsschrauben
- 5: Längsrichtung
- 6: radiale Richtungen

- 10: Brems- und/oder Klemmelement, Radialklemmvorrichtung
- 11: Gehäuse
- 12: Deckelseite
- 13: Bodenseite
- 14: Befestigungsbohrungen
- 15: Längsachse, Mittelachse

- 17: Begrenzungswand

- 20: Gehäuseboden, Gehäuseunterteil
- 21: Innenwandung
- 22: Schalenfläche
- 23: Verstärkungsfüße
- 24: Durchgangsgewinde
- 25: Innenfläche
- 26: Zentrierbund

- 31: Außenwandung, Begrenzungswandabschnitt von (100)
- 32: Zentrierabsatz
- 33: eingesenkte Durchbrüche
- 34: Innenseite
- 35: Verstärkungen
- 36: Verformungsrichtung
- 37: Ringnuten

- 41: Grundring
- 42: zylindrische Durchbrüche
- 43: kegelförmig angesenkte Durchbrüche
- 44: Auflagering
- 45: Innengewinde

- 50: Gehäusedeckel, Gehäuseoberteil
- 51: hydraulischer Anschluss, erste Hydraulikanschlüsse
- 52: Ausgleichsraumanschluss, zweite Hydraulikanschlüsse
- 53: Auflageflansch
- 54: Unterseite von (53)
- 55: Ringnuten
- 56: Dichtringnuten
- 57: Dichtringe

- 61: Stützring
- 62: Außenseite von (61)
- 63: Innenseite von (61)
- 64: Montagebohrung
- 65: Stopfen
- 66: Unterseite
- 67: Gewindebohrungen
- 68: Dichtringnuten
- 69: Zugbolzendurchbrüche

- 71: Verschlussschrauben, Senkschrauben
- 72: Zentrierstifte
- 73: Dichtringe

- 80: Zugbolzen
- 81: Zugbolzenkopf
- 82: Innensechskant
- 83: Schaft
- 84: Ringnut
- 85: Ringnut
- 86: Dichtring, Dichtelement
- 87: Dichtring, Dichtelement
- 88: Gewinde
- 89: Freistich

- 91: Bund
- 92: Zugbolzenenden
- 93: Dichtring
- 94: Ringnut
- 95: Auflagebund
- 96: Stufenfläche
- 97: Außengewinde von (81)

- 100: Druckraum
- 101: Begrenzungswandabschnitt aus (41)
- 102: Begrenzungswandabschnitt aus (31)
- 103: Begrenzungswandabschnitt aus (61)
- 104: Außenmembran

- 110: Ausgleichsraum
- 111: Innenmembran

- 120: Sicherungsadapter
- 121: Einsenkung, Sicherungsaufnahme
- 122: Stirnfläche
- 123: Zapfenaufnahmen
- 124: Außengewinde
- 125: Innengewinde von (120)

## Patentansprüche

1. Brems- und/oder Klemmelement (10) mit einem, mindestens einen hydraulischen Anschluss (51), eine Innenwandung (21) und eine Außenwandung (31) aufweisenden ringförmigen Gehäuse (11),
**dadurch gekennzeichnet,**
- **dass** die Innenwandung (21) und die Außenwandung (31) mittels radial orientierter Zugbolzen (80) miteinander verbunden sind,
- **dass** im Gehäuse (11) ein an die Außenwandung (31) angrenzender und von der Innenwandung (21) beabstandeter, mit dem genannten hydraulischen Anschluss (51) verbundener Druckraum (100) angeordnet ist, wobei die Außenwandung (31) eine Außenmembran (104) des Druckraums (100) bildet,
- **dass** im Gehäuse (11) ein an die Innenwandung (21) angrenzender, von der Außenwandung (31) beabstandeter Ausgleichsraum (110) angeordnet ist, wobei die Innenwandung (21) eine Innenmembran (111) bildet und
- **dass** die Summe der minimalen Wandstärken der Innenmembran (111) und der Außenmembran (104) kleiner ist als die minimale Wandstärke jedes anderen, den Druckraum (100) begrenzenden Begrenzungswandabschnitts (101, 102, 103) des Gehäuses (11), sodass bei hydraulischer Belastung des Druckraums (100) die minimale Steifigkeit des Brems- und/oder Klemmelements (10) in radialer Richtung (6) orientiert ist.

2. Brems- und/oder Klemmelement (10) nach Anspruch 1, **dadurch gekennzeichnet, dass** die minimale Wandstärke der Außenmembran (104) mindestens doppelt so dick ist wie die minimale Wandstärke der Innenmembran (111).

3. Brems- und/oder Klemmelement (10) nach Anspruch 1, **dadurch gekennzeichnet, dass** die Außenwandung (31) koaxial zu einer Schalenfläche (22) der Innenwandung (21) angeordnet ist.

4. Brems- und/oder Klemmelement (10) nach Anspruch 1, **dadurch gekennzeichnet, dass** jeder Zugbolzen (80) an der Innenwandung (21) in jeweils einem Verstärkungsfuß (23) befestigt ist.

5. Brems- und/oder Klemmelement (10) nach Anspruch 1, **dadurch gekennzeichnet, dass** jeder Zugbolzen (80) in radialer Richtung (6) des Brems- und/oder Klemmelements (10) verschiebbar gelagert ist.

6. Brems- und/oder Klemmelement (10) nach Anspruch 1, **dadurch gekennzeichnet, dass** der Druckraum (100) und der Ausgleichsraum (110) mittels mindestens eines Dichtelements (86) hermetisch voneinander abgetrennt sind.

7. Brems- und/oder Klemmelement (10) nach Anspruch 1, **dadurch gekennzeichnet, dass** der Ausgleichsraum (110) mit einem Ausgleichsraumanschluss (52) verbunden ist.

8. Brems- und/oder Klemmelement (10) nach Anspruch 7, **dadurch gekennzeichnet, dass** der Ausgleichsraumanschluss (52) als zweiter Hydraulikanschluss (52) ausgebildet ist.

9. Brems- und/oder Klemmelement (10) nach Anspruch 1, **dadurch gekennzeichnet, dass** das Gehäuse (11) einen die Zugbolzen (80) tragenden Gehäuseboden (20) und einen die Zugbolzen (80) zumindest bereichsweise führenden Gehäusedeckel (50) aufweist.

10. Brems- und/oder Klemmelement (10) nach Anspruch 1, **dadurch gekennzeichnet, dass** der Zugbolzen (80) in der Außenwandung (31) mittels eines den Zugbolzen (80) vorspannenden Sicherungsadapters (120) fixiert ist.

## Claims

1. A braking and/or clamping element (10) having an annular housing (11), which has at least one hydraulic connection (51), an inner wall (21), and an outer wall (31),
**characterised in that**
- the inner wall (21) and the outer wall (31) are connected to one another by means of radially oriented tension bolts (80);
- a pressure space (100), which is adjacent to the outer wall (31), spaced from the inner wall (21) and connected to the said hydraulic connection (51), is arranged in the housing (11), wherein the outer wall (31) forms an outer diaphragm (104) of the pressure space (100);
- an equalisation space (110), which is adjacent to the inner wall (21) and spaced from the outer wall (31), is arranged in the housing (11), wherein the inner wall (21) forms an inner diaphragm (111);
- and the sum of the minimum wall thicknesses of the inner diaphragm (111) and the outer diaphragm (104) is smaller than the minimum wall thickness of any other delimiting wall section (101, 102, 103) of the housing (11) delimiting the pressure space (100), so that when the pressure space (100) is hydraulically loaded, the minimum rigidity of the braking and/or clamping element (10) is oriented in the radial direction (6).

2. The braking and/or clamping element (10) according to Claim 1, **characterised in that** the minimum wall thickness of the outer diaphragm (104) is at least twice as thick as the minimum wall thickness of the inner diaphragm (111).

3. The braking and/or clamping element (10) according to Claim 1, **characterised in that** the outer wall (31) is arranged coaxially with a shell face (22) of the inner wall (21).

4. The braking and/or clamping element (10) according to Claim 1, **characterised in that** each tension bolt (80) is fastened to the inner wall (21) in one reinforcement foot (23) each.

5. The braking and/or clamping element (10) according to Claim 1, **characterised in that** each tension bolt (80) is mounted displaceably in the radial direction (6) of the braking and/or clamping element (10).

6. The braking and/or clamping element (10) according to Claim 1, **characterised in that** the pressure space (100) and the equalisation space (110) are hermetically isolated from one another by means of at least one sealing element (86).

7. The braking and/or clamping element (10) according to Claim 1, **characterised in that** the equalisation space (110) is connected to an equalisation space connection (52) .

8. The braking and/or clamping element (10) according to Claim 7, **characterised in that** the equalisation space connection (52) is designed as a second hydraulic connection (52).

9. The braking and/or clamping element (10) according to Claim 1, **characterised in that** the housing (11) has a housing bottom (20), which bears the tension bolts (80), and a housing cover (50), which guides the tension bolts (80) at least in some regions.

10. The braking and/or clamping element (10) according to Claim 1, **characterised in that** the tension bolt (80) is fixed in the outer wall (31) by means of a securing adapter (120) which preloads the tension bolt (80).

## Revendications

1. Elément de freinage et/ou de serrage (10) avec un boîtier (11) de forme annulaire comportant au moins un raccord hydraulique (51), une paroi intérieure (21) et une paroi extérieure (31),
**caractérisé en ce que**
- la paroi intérieure (21) et la paroi extérieure (31) sont reliées entre elles au moyen d'un boulon tirant (80) à orientation radiale,
- un compartiment sous pression (100) adjacent à la paroi extérieure (31) et à distance de la paroi intérieure (21), relié audit raccord hydraulique (51) est disposé dans le boîtier (11), sachant que la paroi extérieure (31) forme une membrane extérieure (104) du compartiment sous pression (100),
- un compartiment de compensation (110) adjacent à la paroi intérieure (21), à distance de la paroi extérieure (31) est disposé dans le boîtier (11) sachant que la paroi intérieure (21) forme une membrane intérieure (111) et
- le total des épaisseurs de paroi minimales de la membrane intérieure (111) et de la membrane extérieure (104) est plus petit que l'épaisseur de paroi minimale de chaque autre section de paroi de délimitation (101, 102, 103) du boîtier (11) limitant le compartiment sous pression (100), de telle sorte que lors de la sollicitation hydraulique du compartiment sous pression (100) la rigidité minimale de l'élément de freinage et/ou de serrage (10) est orientée en direction radiale (6) .

2. Elément de freinage et/ou de serrage (10) selon la revendication 1, **caractérisé en ce que** l'épaisseur de paroi minimale de la membrane extérieure (104) est au moins le double en épaisseur de l'épaisseur de paroi minimale de la membrane intérieure (111).

3. Elément de freinage et/ou de serrage (10) selon la revendication 1, **caractérisé en ce que** la paroi extérieure (31) est disposée coaxialement à une surface de coque (22) de la paroi intérieure (21).

4. Elément de freinage et/ou de serrage (10) selon la revendication 1, **caractérisé en ce que** chaque boulon tirant (80) est fixé à la paroi intérieure (21) respectivement dans un pied de renfort (23).

5. Elément de freinage et/ou de serrage (10) selon la revendication 1, **caractérisé en ce que** chaque boulon tirant (80) est logé pouvant être déplacé dans la direction radiale (6) de l'élément de freinage et/ou de serrage (10).

6. Elément de freinage et/ou de serrage (10) selon la revendication 1, **caractérisé en ce que** le compartiment sous pression (100) et le compartiment de compensation (110) sont séparés hermétiquement l'un de l'autre au moyen d'au moins un élément d'étanchéité (86).

7. Elément de freinage et/ou de serrage (10) selon la revendication 1, **caractérisé en ce que** le compartiment de compensation (110) est relié à un raccord de compartiment de compensation (52).

8. Elément de freinage et/ou de serrage (10) selon la revendication 7, **caractérisé en ce que** le raccord de compartiment de compensation (52) est constitué sous la forme d'un deuxième raccord hydraulique (52).

9. Elément de freinage et/ou de serrage (10) selon la revendication 1, **caractérisé en ce que** le boîtier (11) comporte un fond de boîtier (20) portant le boulon tirant (80) et un couvercle de boîtier (50) guidant au moins par endroits le boulon tirant (80).

10. Elément de freinage et/ou de serrage (10) selon la revendication 1, **caractérisé en ce que** le boulon tirant (80) est fixé dans la paroi extérieure (31) au moyen d'un adaptateur de sécurité (120) précontraignant le boulon tirant (80).
